# EUROPEAN PATENT SPECIFICATION

(11) **EP 2 719 437 B1**
(45) Date of publication and mention of the grant of the patent: **04.12.2019**
(21) Application number: 12796520.0
(22) Date of filing: 22.05.2012
(51) Int. Cl.: B01D 53/053, C01B 32/40, C01B 32/50

(54) **TARGET GAS SEPARATION METHOD**
ZIELGASTRENNUNGSVERFAHREN
PROCÉDÉ DE SÉPARATION DE GAZ CIBLE

(30) Priority: 07.06.2011 JP 2011126897
(43) Date of publication of application: 16.04.2014
(73) Proprietor: Sumitomo Seika Chemicals Co., Ltd., Kako-gun, Hyogo 675-0145 (JP); JFE Steel Corporation, Tokyo, 100-0011 (JP)
(72) Inventor: TAKATA, Yoshinori, Kako-gun Hyogo 675-0145 (JP); MIYAKE, Masanori, Kako-gun Hyogo 675-0145 (JP); TAKENAKA, Kunio, Kako-gun Hyogo 675-0145 (JP); MOGI, Yasuhiro, Tokyo 100-0011 (JP); FUJIBAYASHI, Akio, Tokyo 100-0011 (JP); SAIMA, Hitoshi, Tokyo 100-0011 (JP); HARAOKA, Takashi, Tokyo 100-0011 (JP)
(74) Representative: Boult Wade Tennant LLP
(86) International application number: PCT/JP2012/062973
(87) International publication number: WO 2012/169338

(56) References cited:
- EP-A2- 0 038 410
- JP-A- 1 155 926
- JP-A- 6 254 335
- JP-A- 7 068 119
- JP-A- 10 101 318
- JP-A- 60 168 513
- JP-A- 2010 069 452
- JP-A- 2011 005 493
- US-A- 3 720 042
- US-A- 4 070 164
- US-A- 4 129 424
- US-A- 4 775 394

## Description

### TECHNICAL FIELD

The present invention relates to a method for separating a target gas such as carbon dioxide or carbon monoxide from a gas mixture containing the target gas by pressure swing adsorption (hereinafter referred to as "PSA").

### BACKGROUND ART

Carbon dioxide is the main cause of global warming. As a measure to stop global warming, in addition to the practical application of energy saving techniques for reducing fuel consumption and carbon dioxide emission, practical application of techniques for separation or collection and fixation of carbon dioxide has been demanded. Gas mixtures containing a relatively large amount of carbon dioxide are by-produced in steel works as hot blast furnace gas, converter gas, converter combustion gas and so on. From a carbon-dioxide-containing gas mixture such as this type of gas by-produced in steel works, carbon dioxide can be separated.

Carbon monoxide is widely used in chemical plants as a material for a functional resin, such as polycarbonate or polyurethane used for automobile parts (e.g. inner panel), or a material for chemicals such as acetic acid or aldehyde. Cracked gas of e.g. methanol, LPG, heavy oil or coke and converter gas by-produced in steel works are gas mixtures containing a relatively large amount of carbon monoxide. Carbon monoxide can be separated from a carbon-monoxide-containing gas mixture such as this type of converter gas, and can be used as materials for chemical products.

PSA is known as a technique for separating a target gas such as carbon dioxide or carbon monoxide from a gas mixture containing the target gas. This technique uses a plurality of adsorption columns in which an adsorbent for selectively adsorbing the target gas (carbon dioxide or carbon monoxide) is loaded. In a conventional target gas separation method using PSA, an adsorption step, a rinsing step and a desorption step are performed in an adsorption column. In the adsorption step, a gas mixture as a crude gas containing a target gas is introduced into the adsorption column, so that the target gas in the gas mixture is adsorbed to the adsorbent while non-adsorbed gas is discharged from the adsorption column. In the rinsing step, a gas containing the target gas at a high concentration is passed through the adsorption column as rinsing gas so that the rinsing off-gas is discharged. In the desorption step, the pressure inside the adsorption column is reduced to a predetermined value to cause the target gas to be desorbed from the adsorbent, and the desorbed gas mainly containing the target gas is discharged from the adsorption column. The desorbed gas discharged from the adsorption column in the desorption step is collected as target gas of high purity. Depressurization of the adsorption column in the desorption step is performed by a depressurization means such as a vacuum pump. In the target gas separation by PSA, the cycle including the adsorption step, rinsing step and desorption step is repeated in each of the adsorption columns. The method for separating a target gas such as carbon dioxide or carbon monoxide by the PSA is disclosed in e.g. Patent Documents 1 and 2 identified below.

In steel works, a large amount of gas is by-produced. Thus, in the gas separation that uses by-produced gas generated in steel works as a crude gas, a large amount of gas needs to be processed. Thus, when the gas separation is to be performed by PSA, the apparatus for performing PSA tends to become large. As a measure to make the PSA apparatus compact, it may be considered to shorten the time taken for one cycle (cycle time), which consists of the adsorption step, the rinsing step and the desorption step. In an arrangement in which one cycle consisting of the above-described three steps is to be performed successively in one adsorption column, it is desirable in terms of efficiency to use three or more adsorption columns so that the adsorption step, the rinsing step and the desorption step can be performed in parallel. For instance, where three adsorption columns are used to perform the adsorption step, the rinsing step and the desorption step at the same time, crude gas can be continuously introduced into any one of the adsorption columns that is undergoing the adsorption step. In this case, the cycle time can be shortened by shortening the time for each step. When the cycle time is shortened, the time allotted to the adsorption step and the time allotted to the desorption step in each of the adsorption columns (adsorption time = desorption time = one third of the cycle time) is shortened as well. When the adsorption time is shortened, the breakthrough time of the adsorbent can be made short. In this case, less amount of adsorbent needs to be loaded, so that size reduction of the apparatus as well as continuous processing of the crude gas can be realized.

However, in the case where desorbed gas is collected as the target gas of high purity in PSA, decompression using a vacuum pump in the desorption step takes a considerable time before the pressure inside the adsorption column drops to a predetermined pressure. Thus, when the time for decompression is shortened, the pressure inside the adsorption column may not reach the predetermined pressure, which may result in deterioration of target gas separation performance.

### TECHNICAL REFERENCE

### PATENT DOCUMENT

Patent Document 1: JP-B-H02-39928
Patent Document 2: JP-B-S61-37968

Further JP 2011 00 5493 discloses a Pressure Swing Adsorption (PSA) process.

### SUMMARY OF THE INVENTION

The present invention has been conceived under the above-described circumstances. It is therefore an object of the present invention to provide a method for realizing efficient separation and collection of target gas with a compact apparatus structure, in separation of target gas, such as carbon dioxide or carbon monoxide, with high purity from a gas mixture by utilizing PSA.

The invention is defined by the method of claim 1.

According to a first aspect of the present invention, there is provided a target gas separation method for separating a target gas from a gas mixture containing the target gas by using three adsorption columns containing an adsorbent for selectively adsorbing the target gas. The method comprises repeating a cycle in each of the adsorption columns. The cycle includes an adsorption step of introducing the gas mixture into the adsorption column to adsorb the target gas in the gas mixture to the adsorbent while discharging non-adsorbed gas from the adsorption column, a rinsing step of introducing rinsing gas into the adsorption column to discharge rinsing off-gas from the adsorption column, and a desorption step of reducing the pressure inside the adsorption column to desorb the target gas from the adsorbent and discharging the desorbed gas from the adsorption column. In this method, the gas mixture is continuously introduced into any one of the adsorption columns so that the adsorption step is constantly performed in any one of the adsorption columns throughout the cycle, and the desorption time from the beginning to the end of the desorption step is made longer than the adsorption time from the beginning 35 to the end of the adsorption step.

In this method, the adsorption step is constantly performed in any one of the adsorption columns throughout the cycle, and the desorption time is longer than the adsorption time. Thus, in certain periods of the cycle, the desorption step is performed in parallel in two different adsorption columns . By performing the desorption step in parallel in a plurality of adsorption columns, the cycle time can be shortened while securing sufficient time for the desorption step. By shortening the cycle time, the adsorption time is also shortened. Thus, provided that the crude gas supply condition is the same, the adsorbent breakthrough time can be shortened, whereby less amount of adsorbent needs to be loaded. Thus, an adsorption column with a smaller volume can be employed, which leads to size reduction of the apparatus, including adsorption columns, for pressure swing adsorption (PSA). Thus, in obtaining a target gas of high purity from a crude gas by PSA, this method is suitable for making the apparatus for PSA compact without deteriorating the target gas separation performance.

According to the invention, the rinsing time from the beginning to the end of the rinsing step is made shorter than the adsorption time. The desorption step in one of the adsorption columns includes a first desorption step for discharging a first desorbed gas from the one of the adsorption columns from the beginning of the desorption step after the rinsing step till the end of the adsorption step in another of the adsorption columns which is undergoing the adsorption step, and a second desorption step for discharging a second desorbed gas from the one of the adsorption columns after the first desorption step.

According to the invention, the second desorption step in the one of the adsorption columns is performed in parallel with the adsorption step in another of the adsorption columns which is undergoing the adsorption step.

Preferably, in the rinsing step, the first desorbed gas is introduced, via a buffer tank for storing target gas, into the adsorption column to be rinsed as the rinsing gas.

Preferably, in the rinsing step, the second desorbed gas is also introduced via the buffer tank into the adsorption column to be rinsed as the rinsing gas.

Preferably, the first desorption step comprises reducing the pressure inside the adsorption column by a first depressurizer for reducing the pressure inside the adsorption column, and the second desorption step comprises reducing the pressure inside the adsorption column by a second depressurizer for reducing the pressure inside the adsorption column.

Preferably, the second desorption step comprises reducing the pressure inside the adsorption column also by the first depressurizer from the beginning to the middle of the second desorption step.

Also disclosed (not claimed) is a target gas separation apparatus for separating a target gas from a gas mixture containing the target gas. The apparatus comprises at least three adsorption columns each including a first gas port and a second gas port and loaded with an adsorbent for selectively adsorbing the target gas between the first gas port and the second gas port, a buffer tank for storing the target gas, a first depressurizer and a second depressurizer for reducing the pressure inside the adsorption columns, a first piping including a main conduit with a gas mixture introduction end and a plurality of branches provided for the adsorption columns, respectively, connected to the first gas ports of the adsorption columns and provided with valves, a second piping including a main conduit with a non-adsorbed gas discharge end and a plurality of branches provided for the adsorption columns, respectively, connected to the second gas ports of the adsorption columns and provided with valves, a third piping including a main conduit with a rinsing off-gas discharge end and a plurality of branches provided for the adsorption columns, respectively, connected to the second gas ports of the adsorption columns and provided with valves, a fourth piping including a main conduit connected to the first depressurizer and a plurality of branches provided for the adsorption columns, respectively, connected to the first gas ports of the adsorption columns and provided with valves, a fifth piping connecting the first depressurizer and the buffer tank to each other, a sixth piping including a main conduit connected to the buffer tank and provided with a valve, and a plurality of branches provided for the adsorption columns, respectively, connected to the first gas ports of the adsorption columns and provided with valves, and a seventh piping including a main conduit connected to the second depressurizer and a plurality of branches provided for the adsorption columns, respectively, connected to the first gas ports of the adsorption columns and provided with valves.

Preferably, the target gas separation apparatus further comprises an eighth piping connecting the fifth piping and the second depressurizer to each other.

Other features and advantages of the present invention will become more apparent from detailed description given below with reference to the accompanying drawings.

### BRIEF DESCRIPTION OF THE DRAWINGS

Fig. 1 is a schematic structural view of a gas separation apparatus that can be used for performing a target gas separation method according to a first embodiment of the present invention;
Fig. 2 is a table showing the steps performed in each of adsorption columns, the adsorption columns to be depressurized by depressurization means, and the open/closed state of each of automatic valves of the gas separation apparatus shown in Fig. 1, in each of Steps of the target gas separation method according to the first embodiment;
Fig. 3 shows gas flows in Steps 1-6 of the target gas separation method according to the first embodiment;
Fig. 4 is a schematic structural view of a gas separation apparatus that can be used for performing a target gas separation method according to a second embodiment the present invention;
Fig. 5 is a table showing the steps performed in each of adsorption columns, the adsorption column to be depressurized by depressurization means, and the open/closed state of each of automatic valves of the gas separation apparatus shown in Fig. 4, in each of Steps of a target gas separation method according to the second embodiment;
Fig. 6 shows gas flows in Steps 1-6 of the target gas separation method according to the second embodiment;
Fig. 7 is a schematic structural view of a gas separation apparatus that can be used for performing a target gas separation method according to Comparative Examples;
Fig. 8 is a table showing the steps performed in each of adsorption columns, the adsorption column to be depressurized by depressurization means, and the open/closed state of each of automatic valves of the gas separation apparatus shown in Fig. 7, in each of Steps of a target gas separation method according to Comparative Examples; and
Fig. 9 shows gas flows in Steps 1-6 of the target gas separation method according to Comparative Examples.

### MODE FOR CARRYING OUT THE INVENTION

Preferred embodiments of the present are described below with reference to the accompanying drawings.

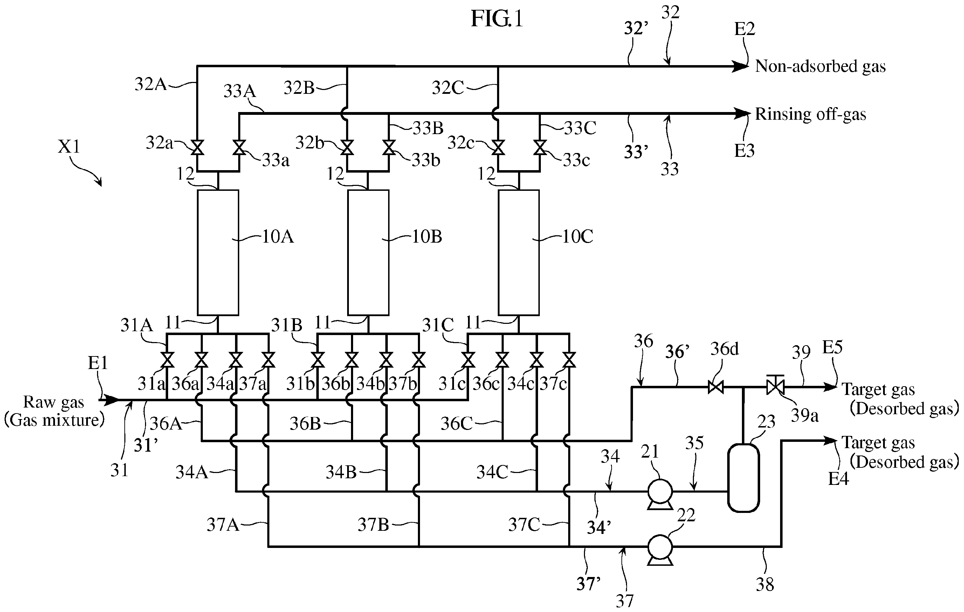

Fig. 1 shows the schematic structure of a gas separation apparatus X1 that can be used for performing a target gas separation method according to a first embodiment of the present invention. The gas separation apparatus X1 is designed to separate a target gas from a raw gas containing the target gas by PSA and includes adsorption columns 10A, 10B, 10C, vacuum pumps 21, 22, a buffer tank 23, and pipings 31-39. Examples of the target gas include carbon dioxide and carbon monoxide. When the target gas is carbon dioxide, the crude gas may be a gas by-produced in steel works, such as hot blast furnace gas, converter gas or converter combustion gas. The gases by-produced in steel works are subjected to pretreatment, such as dehydration or removal of sulfur compounds, as requiredbefore use as a crude gas. When the target gas is carbon monoxide, converter gas may be used as the crude gas. For instance, when the crude gas is hot blast furnace gas, its composition (by volume) may be 26-28% carbon dioxide and 73-74% nitrogen. When the crude gas is e.g. converter combustion gas, its composition may be 32-36% carbon dioxide and 65-68% nitrogen. When the crude gas is converter gas, its composition may be 15-16% carbon dioxide, 65-66% carbon monoxide and 19-20% nitrogen.

Each of the adsorption columns 10A, 10B and 10C has gas ports 11 and 12 at its opposite ends. Between the gas ports 11 and 12 is loaded an adsorbent for selectively adsorbing the target gas. When the target gas is carbon dioxide, activated carbon from coconut shell or coal may be used as the adsorbent. When the target gas is carbon monoxide, e.g. activated carbon or activated alumina that carries a copper compound such as CuCl or CuCl₂ in its pores may be used as the adsorbent.

The vacuum pumps 21 and 22 are used to reduce the pressure inside the adsorption columns 10A, 10B, 10C. The buffer tank 23 is a container for temporarily storing the separated target gas.

The piping 31 includes a main conduit 31' having a crude gas introduction end E1, and branches 31A, 31B and 31C connected to the gas ports 11 of the adsorption columns 10A, 10B and 10C, respectively. The branches 31A, 31B and 31C are provided with automatic valves 31a, 31b and 31c, respectively, which switches between an open state and a closed state. Though not illustrated, the main conduit 31' of the piping 31 may be provided with a blower or a compressor for sending the crude gas to the adsorption columns 10A, 10B and 10C by pressure.

The piping 32 includes a main conduit 32' having a gas discharge end E2, and branches 32A, 32B and 32C connected to the gas ports 12 of the adsorption columns 10A, 10B and 10C, respectively. The branches 32A, 32B and 32C are provided with automatic valves 32a, 32b and 32c, respectively, which switches between an open state and a closed state.

The piping 33 includes a main conduit 33' having a gas discharge end E3, and branches 33A, 33B and 33C connected to the gas ports 12 of the adsorption columns 10A, 10B and 10C, respectively. The branches 33A, 33B and 33C are provided with automatic valves 33a, 33b and 33c, respectively, which switches between an open state and a closed state.

The piping 34 includes a main conduit 34' connected to the vacuum pump 21, and branches 34A, 34B and 34C connected to the gas ports 11 of the adsorption columns 10A, 10B and 10C, respectively. The branches 34A, 34B and 34C are provided with automatic valves 34a, 34b and 34c, respectively, which switches between an open state and a closed state.

The piping 35 connects the vacuum pump 21 and the buffer tank 23 to each other.

The piping 36 includes a main conduit 36' connected to the buffer tank 23, and branches 36A, 36B and 36C connected to the gas ports 11 of the adsorption columns 10A, 10B and 10C, respectively. The branches 36A, 36B and 36C are provided with automatic valves 36a, 36b and 36c, respectively, which switches between an open state and a closed state. The main conduit 36' is provided with an automatic valve 3 6d which switches between an open state and a closed state. Though not illustrated, the main conduit 36' of the piping 36 may be provided with a blower or a compressor for sending the rinsing gas, which is described later, to the adsorption columns 10A, 10B and 10C by pressure.

The piping 37 includes a main conduit 37' connected to the vacuum pump 22, and branches 37A, 37B and 37C connected to the gas ports 11 of the adsorption columns 10A, 10B and 10C, respectively. The branches 37A, 37B and 37C are provided with automatic valves 37a, 37b and 37c, respectively, which switches between open state and closed state.

The piping 38 is connected to the vacuum pump 22 and has a target gas extraction end E4.

The piping 39 is connected to the main conduit 36' of the piping 36 and has a target gas extraction end E5. The piping 39 is provided with a flow control valve 39a.

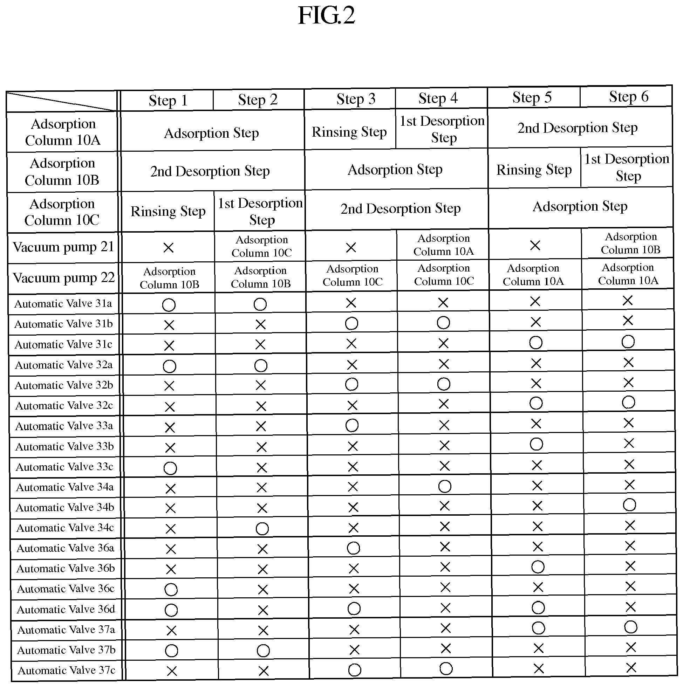

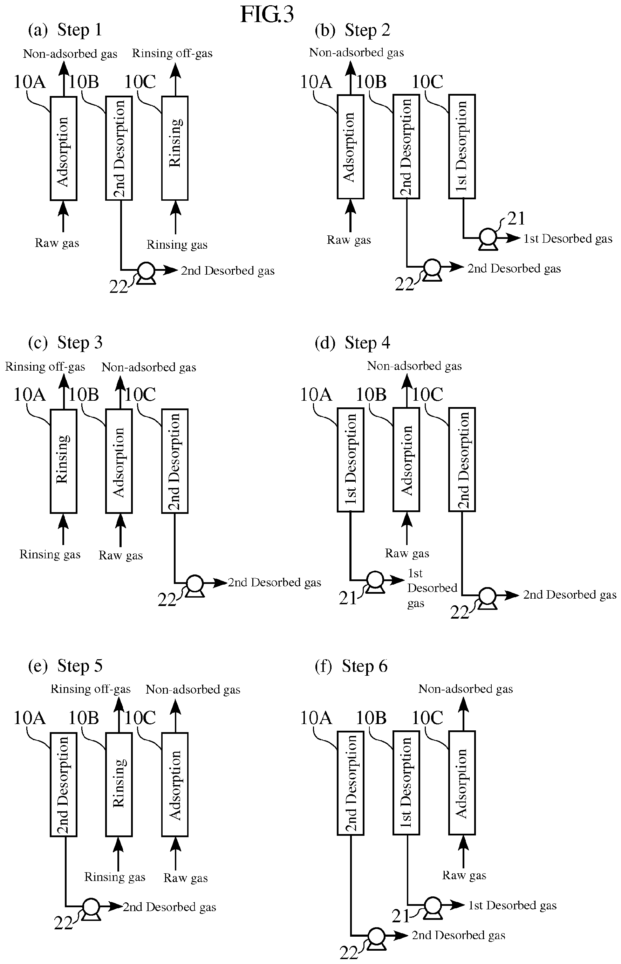

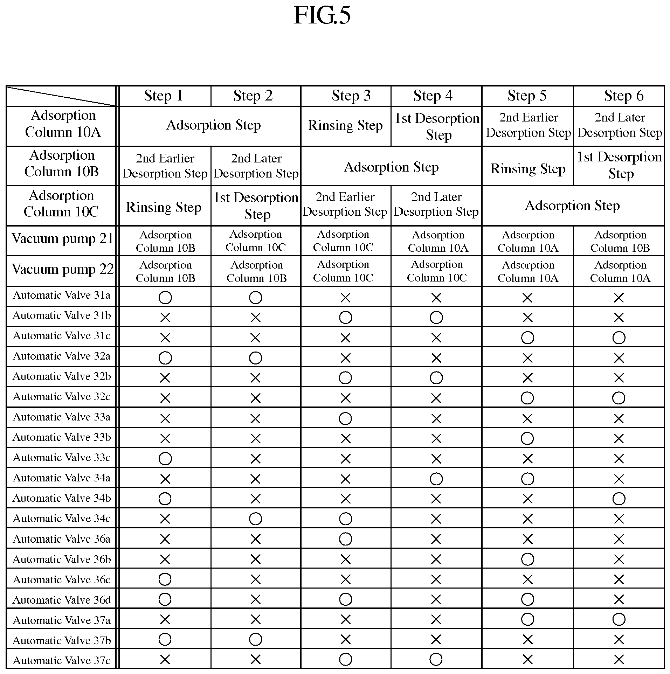

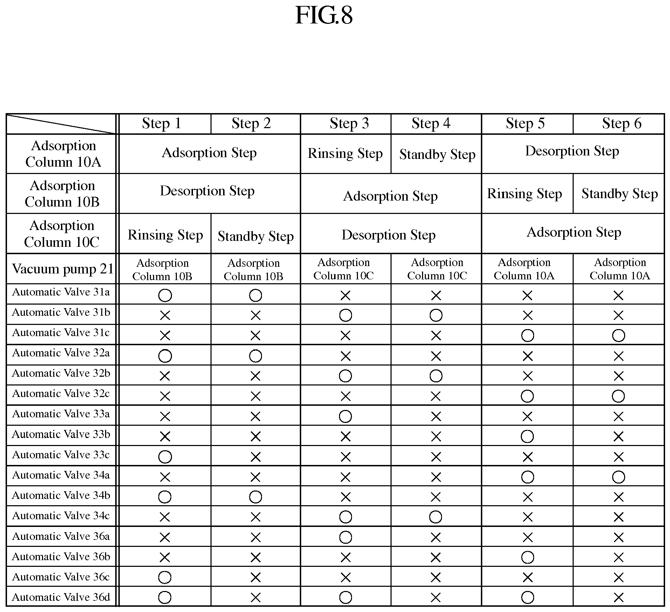

The gas separation apparatus X1 having the above-described structure can be used to perform the target gas separation method according to the first embodiment of the present invention. Specifically, during the operation of the gas separation apparatus X1, the automatic valves 31a-31c, 32a-32c, 33a-33c, 34a-34c, 36a-36d and 37a-37c are switched as shown in Fig. 2 to realize predetermined gas flows in the apparatus, whereby one cycle consisting of Steps 1-6 described below is repeated. In one cycle of the target gas separation method according to the first embodiment, an adsorption step, a rinsing step, a first desorption step and a second desorption step are performed in each of the adsorption columns 10A, 10B and 10C. In Fig. 2 (and also in Figs. 5 and 8 referred to later), the mark ○ indicates that the automatic valve is in the open state, whereas the mark × indicates that the automatic valve is in the closed state. Fig. 2 (and also Figs. 5 and 8 referred to later) also shows which of the adsorption columns is subjected to decompression by the vacuum pumps 21 and 22 in each of Steps. When there is no adsorption column that is subjected to decompression, the mark × is applied. Fig. 3 (a) - (f) shows the gas flow state in the gas separation apparatus X1 in each of the Steps 1-6.

In Step 1, each of the automatic valves 31a-37c is held in the open state or the closed state as shown in the column of Step 1 in Fig. 2. As a result, by the operation of the vacuum pump 22, the gas flow shown in Fig. 3(a) is realized. Thus, the adsorption step is performed in the adsorption column 10A, the second desorption step is performed in the adsorption column 10B, and the rinsing step is performed in the adsorption column 10C.

As will be understood from Figs. 1 and Fig. 3 (a), in Step 1, crude gas is introduced into the adsorption column 10A through the piping 31, which has the crude gas introduction end E1, and the gas port 11. The target gas (e.g. carbon dioxide or carbon monoxide) in the crude gas is adsorbed to the adsorbent in the adsorption column 10A, and non-adsorbed gas is discharged from the gas port 12 of the adsorption column 10A. The non-adsorbed gas flows through the piping 32 and is discharged from the gas discharge end E2 to the outside of the separation apparatus X1. As to the adsorption column 10B, the column 10B has undergone the first desorption step in the preceding step (Step 6 in Fig. 3(f)). Thus, at the beginning of Step 1, the pressure inside of the adsorption column 10B has been reduced to a predetermined intermediate pressure. In Step 1, the pressure inside the adsorption column 10B is further reduced by the vacuum pump 22, whereby the target gas is desorbed from the adsorbent in the adsorption column 10B. The desorbed gas (second desorbed gas) is discharged from the gas port 11 of the adsorption column 10B. The second desorbed gas flows through the piping 37 and the vacuum pump 22 to the piping 38 and is discharged from the target gas extraction end E4 to the outside of the separation apparatus X1. As to the adsorption column 10C, the adsorption column 10C has undergone the adsorption step in Step 6, which will be described later. In Step 1, the first desorbed gas in the buffer tank 23 is introduced, as rinsing gas, from the gas port 11 into the adsorption column 10C through the piping 36, while rinsing off-gas is discharged from the gas port 12 of the adsorption column 10C. The rinsing off-gas flows through the piping 33 and is discharged from the gas discharge end E3 to the outside of the separation apparatus X1. In this way, in Step 1, the adsorption column 10C is rinsed with the first desorbed gas.

In Step 2, each of the automatic valves 31a-37c is held in the open state or the closed state as shown in the column of Step 2 in Fig. 2. As a result, by the operation of the vacuum pumps 21 and 22, the gas flow shown in Fig. 3(b) is realized. Thus, in the adsorption column 10A, the adsorption step is performed continuously from Step 1. In the adsorption column 10B, the second desorption step is performed continuously from Step 1. In the adsorption column 10C, the first desorption step is performed.

As will be understood from Fig. 1 and Fig. 3(b), in Step 2, continuously from Step 1, the crude gas, which is supplied into the piping 31 from the crude gas introduction end E1, is introduced from the gas port 11 into the adsorption column 10A, while non-adsorbed gas is discharged from the gas port 12 of the adsorption column 10A. As to the adsorption column 10B in Step 2, continuously from Step 1, the pressure inside the adsorption column 10B is reduced by the vacuum pump 22, whereby the target gas is desorbed from the adsorbent in the adsorption column 10B. The desorbed gas (second desorbed gas) is discharged from the gas port 11 of the adsorption column 10B. As to the adsorption column 10C, the column 10C has undergone the rinsing step in Step 1. In Step 2, the pressure inside the adsorption column 10C is reduced by the vacuum pump 21, whereby the target gas is desorbed from the adsorbent in the adsorption column 10C. The desorbed gas (first desorbed gas) is discharged from the gas port 11 of the adsorption column 10C. The first desorbed gas flows into the buffer tank 23 through the piping 34, the vacuum pump 21 and the piping 35. The first desorbed gas in the buffer tank 23 can be appropriately taken out of the gas separation apparatus X1 from the target gas extraction end E5 of the piping 39 via the piping 36.

In Steps 1 and 2, the maximum pressure inside the adsorption column 10A, which is in the adsorption step, is e.g. 0-300 kPa (gauge pressure: this holds true for the following description) . In Step 2, the pressure inside the adsorption column 10C when the first desorption step is finished (intermediate pressure) is e.g. in the range of from -94 to -68 kPa. In Step 2, the pressure inside the adsorption column 10B when the second desorption step is finished (minimum pressure) is e.g. in the range of from -99 to -87 kPa.

In Steps 3 and 4, the adsorption step is performed in the adsorption column 10B, similarly to that performed in the adsorption column 10A in Steps 1 and 2. In Steps 3 and 4, the second desorption step is performed in the adsorption column 10C, similarly to that performed in the adsorption column 10B in Steps 1 and 2. In Steps 3 and 4, the rinsing step (Step 3) and the first desorption step (Step 4) are performed in the adsorption column 10A, similarly to those performed in the adsorption column 10C in Steps 1 and 2.

In Steps 5 and 6, the adsorption step is performed in the adsorption column 10C, similarly to that performed in the adsorption column 10A in Steps 1 and 2. In Steps 5 and 6, the second desorption step is performed in the adsorption column 10A, similarly to that performed in the adsorption column 10B in Steps 1 and 2. In Steps 5 and 6, the rinsing step (Step 5) and the first desorption step (Step 6) are performed in the adsorption column 10B, similarly to those performed in the adsorption column 10C in Steps 1 and 2.

In repeating above-described Steps 1-6 in the adsorption columns 10A, 10B and 10C, crude gas is continuously introduced into either one of the adsorption columns 10A, 10B and 10C. Thus, the desorbed gas that contains the target gas at a high concentration is continuously obtained.

In the target gas separation method of the first embodiment, to maintain a certain level of target gas separation performance, depressurization needs to be performed in the desorption step until the inside of the adsorption column drops to a predetermined pressure. In the depressurization using the vacuum pump 21, 22 in the desorption step, it takes a certain time for the pressure in the adsorption column to drop to a predetermined pressure. Thus, the time from the beginning to the end of the desorption step (desorption time) is set to e.g. 200 sec., which may vary depending on the supply amount of the crude gas and the target purity of the target gas to be obtained.

In the rinsing step, desorbed gas (first desorbed gas) enriched with target gas is introduced, as rinsing gas, into the adsorption column after the adsorption step is finished. As a result, the gas remaining in adsorption column at the end of the adsorption step, which contains the target gas at a low concentration, is purged out and replaced with the rinsing gas. Thus, by making the time from the beginning to the end of the rinsing step (rinsing time) longer, the purity of the obtained target gas increases, but the yield of the target gas reduces. For this reason, the rinsing time is set shorter than the time from the beginning to the end of the adsorption step (adsorption time). For instance, the rinsing time is set to 120 sec.

When the rinsing time is set shorter than the adsorption time, the rinsing step ends earlier in the case where the adsorption step and the rinsing step are started at the same time for step shifting. In the first embodiment, as will be understood by focusing on the adsorption columns 10A and 10C in Steps 1 and 2, in the adsorption column 10C in the state after the rinsing step is finished, the first desorption step is performed in Step 2 until the adsorption step in the adsorption column 10A ends. In the adsorption column 10C, the desorption step is continued also in Steps 3 and 4 (second desorption step) . The second desorption step in the adsorption column 10C in Steps 3 and 4 is performed in parallel with the adsorption step in the adsorption column 10B (which has undergone the second desorption step in Step 2).

As noted before, in the adsorption column 10C, the rinsing step is performed in Step 1 and the desorption step (the first desorption step and the second desorption step) is performed in Steps 2-4. Provided that the rinsing time is 120 sec. and the desorption time is 200 sec., the time taken for Steps 1 through 4 (the total time of the rinsing step and the desorption step in the adsorption column 10C) is 320 sec. The time taken for Steps 1-4 is equal to the total time of the adsorption time in the adsorption column 10A in Steps 1 and 2 and the adsorption time in the adsorption column 10B in Steps 3 and 4 (i.e. , double of the adsorption time) . Thus, the adsorption time is 160 sec.

In a conventional gas separation by PSA that uses three adsorption columns to repeat a cycle consisting of an adsorption step, a rinsing step and a desorption step, the switching timing of the adsorption step and the switching timing of the desorption step are matched with each other. Thus, when the desorption time is 200 sec., the adsorption time is also 200sec. , so that the time taken for one cycle (cycle time) consisting of the adsorption step, the rinsing step and the desorption step is 600 sec.

On the other hand, in the target gas separation method of the first embodiment, even when the same time as above, i.e., 200 sec. is allotted to the desorption step, the adsorption time is shorter (160 sec.) than the adsorption time in the conventional method (200 sec.), so that the cycle time is only 480 sec. Provided that the crude gas supply condition is the same, when the adsorption time is shortened, the breakthrough time of the adsorbent can be shortened, so that less amount of adsorbent is necessary. Thus, an adsorption column with a smaller volume can be employed, which leads to size reduction of the gas separation apparatus X1. For instance, when the cycle time is shortened to 80%, from 600 sec. to 480 sec., the size of the gas separation apparatus X1 is expected to be reduced to a corresponding degree. Thus, according to the first embodiment, in obtaining a target gas of high purity from a crude gas by PSA, size reduction of the gas separation apparatus X1 can be achieved while securing sufficient time (e.g. 200 sec.) for the desorption step to prevent deterioration of target gas separation performance.

In the target gas separation method of the first embodiment, in Steps 2, 4 and 6, the desorption step is performed in parallel in two adsorption columns. Performing the desorption step (first and second desorption steps) in parallel in a plurality of adsorption columns in this way allows the cycle time to be shortened while securing sufficient desorption time. For instance, in Step 2, the second desorption step is performed continuously from Step 1 in the adsorption column 10B, while the first desorption step is performed in the adsorption column 10C. Depressurization of the adsorption column 10B in the second desorption step is performed by the vacuum pump 22, whereas depressurization of the adsorption column 10C in the first desorption step is performed by the vacuum pump 21. As will be understood from this, the target gas separation method of the first embodiment, which performs the desorption step in parallel, is properly realized by the gas separation apparatus X1 having two vacuum pumps 21 and 22.

According to the target gas separation method of the first embodiment, the first desorbed gas discharged from adsorption columns in first desorption step, which contains the target gas at a high concentration, is temporarily stored in the buffer tank 23. In the rinsing step, the first desorbed gas stored in the buffer tank 23 is introduced as rinsing gas into the adsorption column to be rinsed. When the desorption step (first desorption step) starts after the rinsing step, the interior of the adsorption column is filled with gas (mainly rinsing gas). Thus, in the early time of the desorption step (first desorption step), a relatively large amount of gas is discharged from the adsorption column. In this way, utilizing the first desorbed gas as rinsing gas by way of the buffer tank 23 realizes stable supply of rinsing gas.

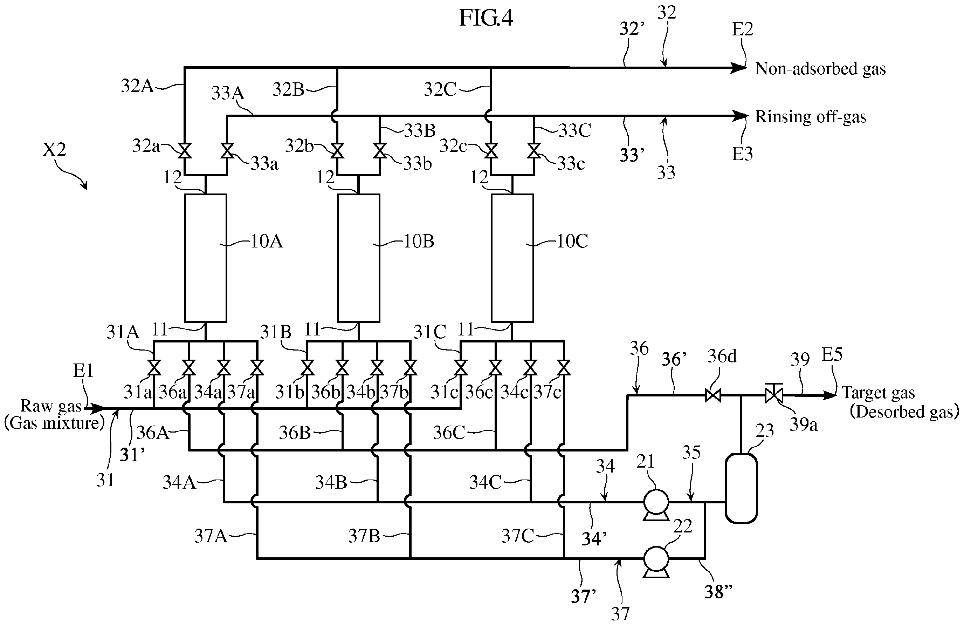

Fig. 4 shows the schematic structure of a gas separation apparatus X2 that can be used for performing the target gas separation method according to a second embodiment of the present invention. The gas separation apparatus X2 is designed to separate a target gas from a crude gas containing the target gas by pressure swing adsorption (PSA) and includes adsorption columns 10A, 10B, 10C, vacuum pumps 21, 22, a buffer tank 23, and pipings 31-37, 38" and 39. The gas separation apparatus X2 is different from the gas separation apparatus X1 in that it includes piping 38" instead of the piping 38.

The piping 38" connects the vacuum pump 22 to the piping 35. The piping 35 is connected to the buffer tank 23. Thus, the piping 38" connects the vacuum pump 22 to the buffer tank 23. In this regard, the piping 38" differs from the piping 38 of the gas separation apparatus X1, which has the target gas extraction end E4. Except this, the structure of the gas separation apparatus X2 is the same as that of the gas separation apparatus X1.

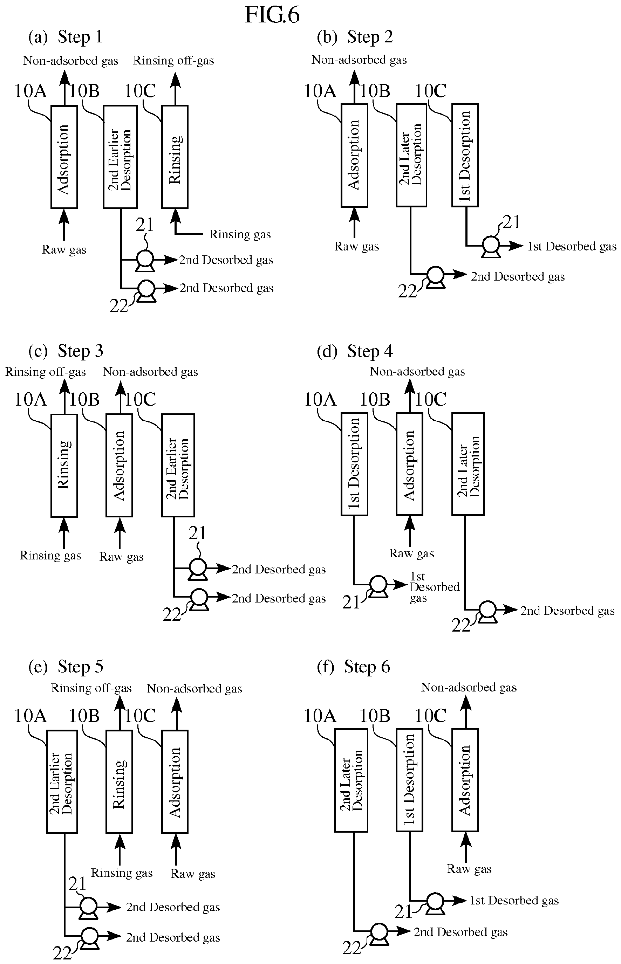

The gas separation apparatus X2 having the above-described structure can be used to perform the target gas separation method according to the second embodiment of the present invention. Specifically, during the operation of the gas separation apparatus X2, the automatic valves 31a-31c, 32a-32c, 33a-33c, 34a-34c, 36a-36d and 37a-37c are switched as shown in Fig. 5 to realize predetermined gas flow in the apparatus, whereby one cycle consisting of Steps 1-6 described below is repeated. In one cycle of the target gas separation method according to the second embodiment, an adsorption step, a rinsing step, a first desorption step, a second earlier desorption step and a second later desorption step are performed in each of the adsorption columns 10A, 10B and 10C. Fig. 6(a)-(f) shows the gas flow in the gas separation apparatus X2 in each of the Steps 1-6.

In Step 1, each of the automatic valves 31a-37c is held in the open state or the closed state as shown in the column of Step 1 in Fig. 5. As a result, by the operation of the vacuum pumps 21 and 22, the gas flow shown in Fig. 6(a) is realized. Thus, the adsorption step is performed in the adsorption column 10A, the second earlier desorption step is performed in the adsorption column 10B, and the rinsing step is performed in the adsorption column 10C.

As will be understood from Figs. 5 and Fig. 6 (a), in Step 1, crude gas is introduced into the adsorption column 10A through the piping 31, which has the crude gas introduction end E1, and the gas port 11. The target gas (e.g. carbon dioxide or carbon monoxide) in the crude gas is adsorbed to the adsorbent in the adsorption column 10A, and non-adsorbed gas is discharged from the gas port 12 of the adsorption column 10A. The non-adsorbed gas flows through the piping 32 and is discharged from the gas discharge end E2 to the outside of the separation apparatus X2. As to the adsorption column 10B, the column 10B has undergone the first desorption step in the preceding step (Step 6 in Fig. 6(f)). Thus, at the beginning of Step 1, the pressure inside of the adsorption column 10B has been reduced to a predetermined intermediate pressure. In Step 1, the pressure inside the adsorption column 10B is further reduced by the vacuum pumps 21 and 22, whereby the target gas is desorbed from the adsorbent in the adsorption column 10B. The desorbed gas (second desorbed gas) is discharged from the gas port 11 of the adsorption column 10B. The second desorbed gas is guided to the buffer tank 23 by way of the piping 34, the vacuum pump 21 and the piping 35 and also by way of the piping 37, the vacuum pump 22, the piping 38" and the piping 35. As to the adsorption column 10C, the adsorption column 10C has undergone the adsorption step in Step 6, which will be described later. In Step 1, the first desorbed gas and the second desorbed gas in the buffer tank 23 is introduced, as rinsing gas, from the gas port 11 into the adsorption column 10C through the piping 36, while rinsing off-gas is discharged from the gas port 12 of the adsorption column 10C. The rinsing off-gas flows through the piping 33 and is discharged from the gas discharge end E3 to the outside of the separation apparatus X2. In this way, in Step 1, the adsorption column 10C is rinsed with the first desorbed gas and the second desorbed gas. In Step 1, the first desorbed gas and the second desorbed gas in the buffer tank 23 can be appropriately taken out of the gas separation apparatus X2 from the target gas extraction end E5 of the piping 39 via the piping 36.

In Step 2, each of the automatic valves 31a-37c is held in the open state or the closed state as shown in the column of Step 2 in Fig. 5. As a result, by the operation of the vacuum pumps 21 and 22, the gas flow shown in Fig. 6(b) is realized. Thus, in the adsorption column 10A, the adsorption step is performed continuously from Step 1. In the adsorption column 10B, the second later desorption step is performed. In the adsorption column 10C, the first desorption step is performed.

As will be understood from Fig. 5 and Fig. 6(b), in Step 2, continuously from Step 1, the crude gas, which is supplied into the piping 31 from the crude gas introduction end E1, is introduced from the gas port 11 into the adsorption column 10A, while non-adsorbed gas is discharged from the gas port 12 of the adsorption column 10A. As to the adsorption column 10B, continuously from Step 1, the pressure inside the adsorption column 10B is reduced by the vacuum pump 22, whereby the target gas is desorbed from the adsorbent in the adsorption column 10B. The desorbed gas (second desorbed gas) is discharged from the gas port 11 of the adsorption column 10B. The second desorbed gas flows into the buffer tank 23 through the piping 37, the vacuum pump 22, the piping 38" and the piping 35. As to the adsorption column 10C, the column 10C has undergone the rinsing step in Step 1. In Step 2, the pressure inside the adsorption column 10C is reduced by the vacuum pump 21, whereby the target gas is desorbed from the adsorbent in the adsorption column 10C. The desorbed gas (first desorbed gas) is discharged from the gas port 11 of the adsorption column 10C. The first desorbed gas flows into the buffer tank 23 through the piping 34, the vacuum pump 21 and the piping 35. The first desorbed gas and the second desorbed gas in the buffer tank 23 can be appropriately taken out of the gas separation apparatus X1 from the target gas extraction end E5 of the piping 39 via the piping 36.

In Steps 1 and 2, the maximum pressure inside the adsorption column 10A, which is in the adsorption step, is e.g. 0-300 kPa. In Step 2, the pressure inside the adsorption column 10C when the first desorption step is finished (intermediate pressure) is e.g. in the range of from -94 to -68 kPa. In Step 2, the pressure inside the adsorption column 10B when the second later desorption step is finished (minimum pressure) is e.g. in the range of from -99 to -87 kPa.

In Steps 3 and 4, the adsorption step is performed in the adsorption column 10B, similarly to that performed in the adsorption column 10A in Steps 1 and 2. In Steps 3 and 4, the second earlier desorption step (Step 3) and the second later desorption step (Step 4) are performed in the adsorption column 10C, similarly to those performed in the adsorption column 10B in Steps 1 and 2. In Steps 3 and 4, the rinsing step (Step 3) and the first desorption step (Step 4) are performed in the adsorption column 10A, similarly to those performed in the adsorption column 10C in Steps 1 and 2.

In Steps 5 and 6, the adsorption step is performed in the adsorption column 10C, similarly to that performed in the adsorption column 10A in Steps 1 and 2. In Steps 5 and 6, the second earlier desorption step (Step 3) and the second later desorption step second desorption step (Step 4) are performed in the adsorption column 10A, similarly to those performed in the adsorption column 10B in Steps 1 and 2. In Steps 5 and 6, the rinsing step (Step 5) and the first desorption step (Step 6) are performed in the adsorption column 10B, similarly to those performed in the adsorption column 10C in Steps 1 and 2.

In repeating above-described Steps 1-6 in the adsorption columns 10A, 10B and 10C, crude gas is continuously introduced into any one of the adsorption columns 10A, 10B and 10C. Thus, the desorbed gas that contains the target gas at a high concentration is continuously obtained.

As will be understood by referring to Fig. 5 and Fig. 6 (a) - (f), in the target gas separation method according to the second embodiment, the desorption step is performed in parallel in two adsorption columns in Steps 2 ,4 and 6. Performing the desorption step (the first desorption step and the second later desorption step) inparallel inapluralityof adsorption columns in this way allows the cycle time to be shortened while securing sufficient desorption time, similarly to the gas separation by the above-described gas separation apparatus X1. Thus, in obtaining a target gas of high purity from a crude gas by PSA, size reduction of the gas separation apparatus X2 can be realized without deteriorating the target gas separation performance.

In the target gas separation method according to the second embodiment, the second desorption step consists of the second earlier desorption step (Steps 1 ,3, 5) which is from the beginning to the middle of the second desorption step and the second earlier desorption step (Steps 2 ,4, 6) after the second earlier desorption step. In the second earlier desorption step, the adsorption column is depressurized not only by the vacuum pump 22 but also by the vacuum pump 21. That is, depressurization in the second earlier desorption step is performed by both of the vacuum pumps 21 and 22. Thus, the interior of adsorption column is sufficiently depressurized in the second earlier desorption step, so that the pressure inside the adsorption column easily drops to the intended pressure . Thus, the method of this embodiment, which depressurizes the adsorption column not only by the vacuum pump 22 but also by the vacuum pump 21 in the second earlier desorption step, is suitable for increasing the yield of the target gas.

Since the vacuum pump 21 is also used for depressurization in the second earlier desorption step, the vacuum pump 21 continues to operate throughout the one cycle. As will be understood from Fig. 2 and Fig. 3 (a) - (f), in the above-described method according to the first embodiment, the vacuum pump 21 operates intermittently, i.e., operates only in Steps 2, 4 and 6 and is at rest in Steps 1, 3 and 5. When the vacuum pump 21 operates intermittently, control of switching between steps is difficult, because it takes a certain amount of time for e.g. the rotor of a vacuum pump to become a steady operation state. Unlike this, the method of this embodiment, in which the vacuum pump 21 operates continuously, is suitable for realizing easy control of the switching between steps.

In the target gas separation method according to the second embodiment, in addition to the first desorbed gas discharged from the adsorption column in the first desorption step, the second desorbed gas discharged from the adsorption column in the second desorption step after the first desorption step is also temporarily stored in the buffer tank 23. In the rinsing step, the first desorbed gas and the second desorbed gas in the buffer tank 23 are introduced as rinsing gas into the adsorption column. When the desorption step starts after the rinsing step, a slight amount of impurity gas is present in the space within the adsorption column. The impurity gas is discharged in the desorption step from the adsorption column 10A, 10B, 10C along with the target gas. The content of the impurity gas in the gas (desorbed gas) discharged from adsorption column 10A, 10B, 10C in the desorption step gradually reduces after the adsorption step is started. Thus, the content of the impurity gas in the gas (second desorbed gas) discharged from the adsorption column 10A, 10B, 10C in the second desorption step is considerably low. Thus, the method of this embodiment in which the second desorbed gas is also used as the rinsing gas is suitable for obtaining target gas of high purity.

Though embodiments of the present invention are described above, the present invention is not limited to these and may be varied in various ways without departing from the scope of the present invention as defined in the appended claims. For instance, the pipings forming the gas flow path in the non-claimed apparatus for performing the target gas separation method according to the present invention may be arranged differently from the foregoing embodiments. Components other than carbon monoxide or carbon dioxide may be set as the target gas of the present invention as long as the component is an easily adsorbable component that can be selectively adsorbed to an adsorbent in the gas separation by PSA.

### EXAMPLES

The advantages of the present invention are explained below by way of Examples and Comparative Examples.

### [Example 1]

The gas separation apparatus X1 having the structure schematically shown in Fig. 1 was used to separate carbon dioxide as a target gas from a crude gas by repeating one cycle consisting of the adsorption step, the rinsing step, the first desorption step and the second desorption step in each of the adsorption columns 10A, 10B and 10C as shown in Fig. 2 and Fig. 3 (a) - (f). In Example 1, the separation of carbon dioxide was performed by the target gas separation method according to the first embodiment of the present invention.

Each of the adsorption columns 10A, 10B, 10C of the gas separation apparatus X1 used in this Example has a cylindrical shape (inner diameter:70 mm, inner height 500 mm). Each of the adsorption columns was loaded with 2.0 dm³ of activated carbon. As the crude gas, use was made of a gas mixture having a composition that simulates hot blast furnace gas as an example of a by-produced gas from steel works (carbon dioxide: 26 vol%, nitrogen: 74 vol%). The crude gas was continuously supplied to the gas separation apparatus X1 at a flow rate of 1 Nm³/h ("N" means the normal or standard state, which holds true in the following description). In this Example, in each of the adsorption columns 10A, 10B and 10C, the adsorption step was performed for 160 sec., the rinsing step was performed for 120 sec., the first desorption step was performed for 40 sec., and the second desorption step was performed for 160 sec. Thus, the desorption time (total time of the first desorption step and the second desorption step) was 200 sec. and the cycle time of one cycle consisting of the above-described steps was 480 sec. The maximum pressure inside the adsorption columns 10A, 10B, and 10C in the adsorption step was set to 100 kPa. The minimum pressure inside the adsorption columns 10A, 10B, 10C in the desorption step (second desorption step) was set to -90 kPa (gauge pressure).

The gas obtained in this Example performed under the above-described conditions contained 99.9 vol% of carbon dioxide and 0.1 vol% of nitrogen as an impurity. The amount of the gas obtained was 0.156 Nm³/h. As to the obtained gas, the recovery ratio of carbon dioxide was 60%.

### [Example 2]

The gas separation apparatus X2 having the structure schematically shown in Fig. 4 was used to separate carbon monoxide as a target gas from a crude gas by repeating one cycle consisting of the adsorption step, the rinsing step, the first desorption step, the second earlier desorption step and the second later desorption step in each of the adsorption columns 10A, 10B and 10C as shown in Figs. 5 and 6. In Example 2, the separation of carbon monoxide was performed by the target gas separation method according to the second embodiment of the present invention.

Each of the adsorption columns 10A, 10B, 10C of the gas separation apparatus X2 used in this Example has a cylindrical shape (inner diameter:70 mm, inner height 500 mm). Each of the adsorption columns was loaded with 2.0 dm³ of activated carbon that carries copper chloride (CuCl) (copper chloride content: 20 wt%) . As the crude gas, use was made of a gas mixture having a composition that simulates converter gas as an example of a by-produced gas from steel works (carbon monoxide: 65 vol%, carbon dioxide: 15 vol%, nitrogen: 20 vol%). The crude gas was continuously supplied to the gas separation apparatus X2 at a flow rate of 1 Nm³/h. In this Example, in each of the adsorption columns 10A, 10B and 10C, the adsorption step was performed for 20 sec., the rinsing step was performed for 80 sec., the first desorption step was performed for 120 sec., the second earlier desorption step was performed for 80 sec., and the second later desorption step was performed for 120 sec. Thus, the desorption time (total time of the first desorption step, the second earlier desorption step and the second later desorption step) was 320 sec. and the cycle time of one cycle consisting of the above-described steps was 600 sec. The maximum pressure inside the adsorption columns 10A, 10B, and 10C in the adsorption step was set to 10 kPa. The minimum pressure inside the adsorption columns 10A, 10B, 10C in the desorption step (second later desorption step) was set to -90 kPa (gauge pressure).

The gas obtained in this Example performed under the above-described conditions contained 99.95 vol% of carbon monoxide. As impurities, the gas contained 300 vol ppm of carbon dioxide and 200 vol ppm of nitrogen. The amount of the gas obtained was 0.52 Nm³/h. As to the obtained gas, the recovery ratio of carbon monoxide was 80%.

### [Comparative Example 1]

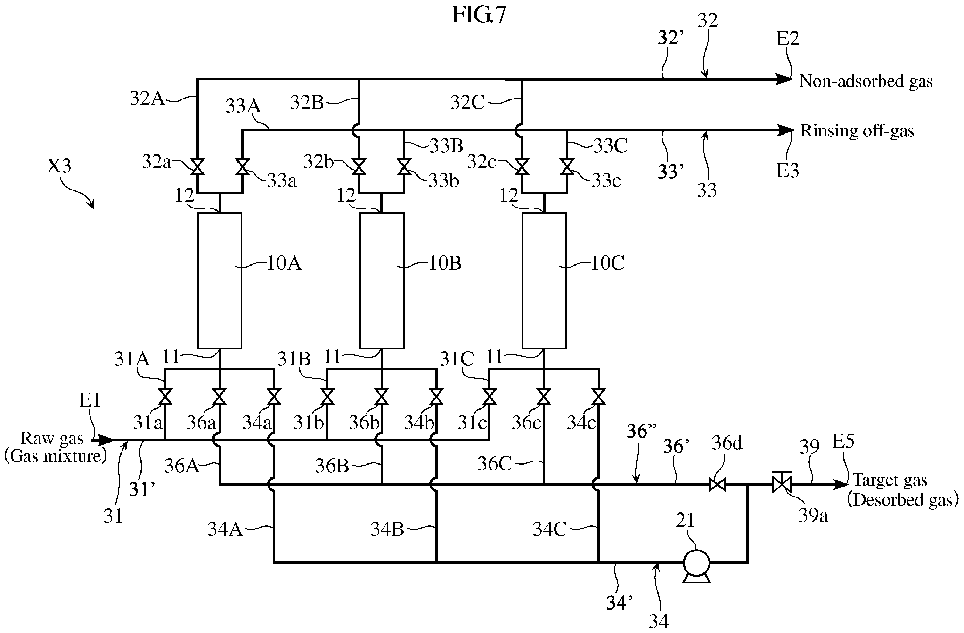

The gas separation apparatus X3 having the structure schematically shown in Fig. 7 was used to separate carbon dioxide as a target gas from a crude gas. The gas separation apparatus X3 is designed to separate a target gas from a crude gas containing the target gas by PSA and includes adsorption columns 10A, 10B, 10C, a vacuum pump 21, and pipings 31-34, 36" and 39. The gas separation apparatus X3 is similar to the gas separation apparatus X1 shown in Fig. 1. However, the gas separation apparatus X3 is different from the gas separation apparatus X1 in that it does not include the vacuum pump 22, buffer tank 23 and pipings 35, 37, 38 provided in the gas separation apparatus X1 and includes a piping 36" instead of the piping 36. That is, the gas separation apparatus X3 includes only the single vacuum pump 21. The piping 36" includes a main conduit 36' connected to the vacuum pump 21.

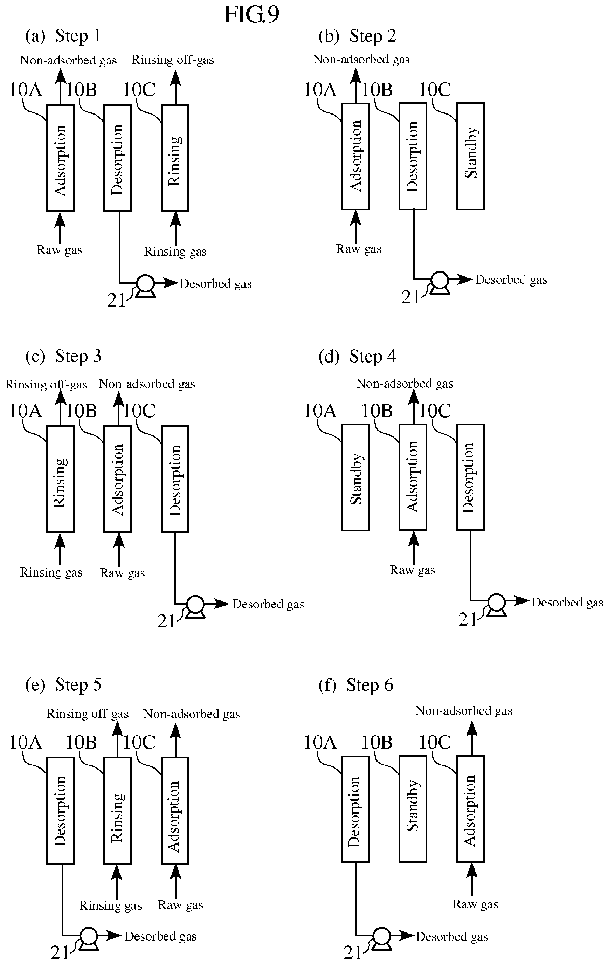

In Comparative Example 1, the automatic valves 31a-31c, 32a-32c, 33a-33c, 34a-34c, and 36a-36d are switched as shown in Fig. 8 to realize predetermined gas flow in the apparatus, whereby one cycle consisting of Steps 1-6 (adsorption step, rinsing step, standby and desorption step) is repeated in each of the adsorption columns 10A, 10B and 10C, to separate carbon dioxide as a target gas from a crude gas. Fig. 9(a) - (f) show the gas flow in the gas separation apparatus X3 in each of the Steps 1-6.

In Comparative Example 1, the same kind of adsorbent as that used in Example 1 was used. The amount of the adsorbent loaded was also the same as that in Example 1. As the crude gas, use was made of a gas having the same composition as that used in Example 1. The desorption step in Comparative Example 1 is a single step, which is a difference of Comparative Example 1 from the Example 1, in which the desorption step consists of the first desorption step and the second desorption step. Part of the desorbed gas discharged from the adsorption column undergoing the desorption step was supplied as rinsing gas into another adsorption column undergoing the rinsing step. Similarly to Example 1, the desorption time in Comparative Example 1 was 200 sec. As will be understood from Fig. 8 and Fig. 9(a) - (f), in Comparative Example 1, switching of the adsorption step and switching of the desorption step were performed at the same timing. Thus, the adsorption time was equal to the desorption time, i.e., 200 sec. The rinsing step was performed for 120 sec. so that the standby time between the rinsing step and the desorption step was 80sec. Thus, the cycle time of one cycle consisting of the above-described steps was 600 sec.

While the cycle time in Example 1 was 480 sec., the cycle time in Comparative Example 1 was 600 sec. Thus, the crude gas was continuously supplied to the gas separation apparatus X3 at a flow rate of 0.8 Nm³/h (480/600=80% flow rate). The maximum pressure inside the adsorption columns 10A, 10B, 10C in the adsorption step and the minimum pressure inside the adsorption columns 10A, 10B, 10C in the desorption step were equal to those in Example 1.

The gas obtained in this Comparative Example 1 performed under the above-described conditions contained 99.9 vol% of carbon dioxide and 0.1 vol% of nitrogen as an impurity. The amount of the gas obtained was 0.1248 Nm³/h. As to the obtained gas, the recovery ratio of carbon dioxide was 60%. The concentration of carbon dioxide in the obtained gas and the recovery in Comparative Example 1 were equal to those in Example 1. However, as compared with Example 1, the amount of crude gas that can be introduced into the adsorption columns 10A, 10B, 10C of a same size was dropped from 1 Nm³/h to 0.8 Nm³/h (80% of Example 1).

### [Comparative Example 2]

The gas separation apparatus X3 having the structure shown in Fig. 7 was used to separate carbon monoxide as a target gas from a crude gas by repeating one cycle consisting of the adsorption step, rinsing step, standby and desorption step in each of the adsorption columns 10A, 10B and 10C as shown in Fig. 8 and Fig. 9(a) - (f).

In Comparative Example 2, the same kind of adsorbent as that used in Example 2 was used. The amount of the adsorbent loaded was also the same as that in Example 2. As the crude gas, use was made of a gas having the same composition as that used in Example 2. The desorption step in this Comparative Example is a single step, which is a difference from Example 2, in which the desorption step consists of the first desorption step, the second earlier desorption step and the second later desorption step. Part of the desorbed gas discharged from the adsorption column undergoing the desorption step was supplied as rinsing gas into another adsorption column undergoing the rinsing step. Similarly to Example 2, the desorption time in this Comparative Example was 320 sec. As will be understood from Fig. 8 and Fig. 9, in this Comparative Example, switching of the adsorption step and switching of the desorption step were performed at the same timing. Thus, the adsorption time was equal to the desorption time, i.e., 320 sec. The rinsing step was performed for 80 sec. so that the standby time between the rinsing step and the desorption step was 240 sec. Thus, the cycle time of one cycle consisting of the above-described steps was 960 sec.

While the cycle time in Example 2 was 600 sec., the cycle time in Comparative Example 2 was 960 sec. Thus, the crude gas was continuously supplied to the gas separation apparatus X3 at a flow rate of 0.625 Nm³/h (600/960=62.5% flow rate). The maximum pressure inside the adsorption columns 10A, 10B, 10C in the adsorption step and the minimum pressure inside the adsorption columns 10A, 10B, 10C in the desorption step were equal to those in Example 2.

The gas obtained in this Comparative Example performed under the above-described conditions contained 99.95 vol% of carbon monoxide. As impurities, the gas contained 300 vol ppm of carbon dioxide and 200 vol ppm of nitrogen. The amount of the gas obtained was 0.325 Nm³/h. As to the obtained gas, the recovery ratio of carbon monoxide was 80%. The concentration of carbon monoxide in the obtained gas and the recovery in Comparative Example 2 were equal to those in Example 2. However, as compared with Example 2, the amount of crude gas that can be introduced into the adsorption columns 10A, 10B, 10C of a same size was dropped from 1 Nm³/h to 0.625 Nm³/h (62.5 % of Example 2).

## Claims

1. A target gas separation method for separating a target gas from a gas mixture containing the target gas by using three adsorption columns containing an adsorbent for selectively adsorbing the target gas, the method comprising repeating a cycle in each of the adsorption columns, the cycle including:
an adsorption step of introducing the gas mixture into the adsorption column to adsorb the target gas in the gas mixture to the adsorbent while discharging non-adsorbed gas from the adsorption column; a rinsing step of introducing rinsing gas into the adsorption column to discharge rinsing off-gas from the adsorption column; and a desorption step of reducing pressure inside the adsorption column to desorb the target gas from the adsorbent and discharging the desorbed gas from the adsorption column,
wherein the gas mixture is continuously introduced into any one of the adsorption columns so that the adsorption step is constantly performed in any one of the adsorption columns throughout the cycle,
desorption time from beginning to end of the desorption step is made longer than adsorption time from beginning to end of the adsorption step,
rinsing time from beginning to end of the rinsing step is made shorter than the adsorption time, and
the desorption step in one of the adsorption columns includes a first desorption step for discharging a first desorbed gas from said one of the adsorption columns from beginning of the desorption step after the rinsing step till end of the adsorption step in another of the adsorption columns which is undergoing the adsorption step, and a second desorption step for discharging a second desorbed gas from said one of the adsorption columns after the first desorption step, and
the second desorption step in said one of the adsorption columns is performed in parallel with the adsorption step in another of the adsorption columns which is undergoing the adsorption step.

2. The target gas separation method according to claim 1, wherein in the rinsing step, the first desorbed gas is introduced, via a buffer tank for storing target gas, into the adsorption column to be rinsed as the rinsing gas.

3. The target gas separation method according to claim 2, wherein in the rinsing step, the second desorbed gas is also introduced via the buffer tank into the adsorption column to be rinsed as the rinsing gas.

4. The target gas separation method according to any one of claims 1 through 3, wherein the first desorption step comprises reducing pressure inside the adsorption column by a first depressurizer for reducing the pressure inside the adsorption column, and
the second desorption step comprises reducing the pressure inside the adsorption column by a second depressurizer for reducing the pressure inside the adsorption column.

5. The target gas separation method according to claim 4, wherein the second desorption step comprises reducing the pressure inside the adsorption column also by the first depressurizer from beginning to middle of the second desorption step.

## Patentansprüche

1. Zielgastrennungsverfahren zum Trennen eines Zielgases von einem das Zielgas enthaltenden Gasgemisch unter Verwendung von drei Adsorptionskolonnen, die ein Adsorptionsmittel zum selektiven Adsorbieren des Zielgases enthalten, wobei das Verfahren das Wiederholen eines Zyklus in jeder der Adsorptionskolonnen umfasst, wobei der Zyklus folgendes umfasst:
einen Adsorptionsschritt des Einführens des Gasgemischs in die Adsorptionskolonne, um das Zielgas in dem Gasgemisch an das Adsorptionsmittel zu adsorbieren, während nicht adsorbiertes Gas aus der Adsorptionskolonne abgeführt wird; einen Spülschritt des Einführens von Spülgas in die Adsorptionskolonne, um Spülabgas aus der Adsorptionskolonne abzuführen; und einen Desorptionsschritt des Reduzierens des Drucks innerhalb der Adsorptionskolonne, um das Zielgas aus dem Adsorptionsmittel zu desorbieren, und des Abführens des desorbierten Gases aus der Adsorptionskolonne,
wobei das Gasgemisch kontinuierlich in eine der Adsorptionskolonnen eingeführt wird, so dass der Adsorptionsschritt während des gesamten Zyklus konstant in einer der Adsorptionskolonnen durchgeführt wird,
Desorptionszeit von Anfang bis Ende des Desorptionsschrittes wird länger gemacht als die Adsorptionszeit von Anfang bis Ende des Adsorptionsschrittes,
Spülzeit von Anfang bis Ende des Spülschrittes wird kürzer gemacht als die Adsorptionszeit, und
der Desorptionsschritt in einer der Adsorptionskolonnen umfasst einen ersten Desorptionsschritt zum Abführen eines ersten desorbierten Gases aus der einen der Adsorptionskolonnen von Anfang des Desorptionsschritts nach dem Spülschritt bis Ende des Adsorptionsschritts in einer anderen der Adsorptionskolonnen, die dem Adsorptionsschritt unterzogen wird, und einen zweiten Desorptionsschritt zum Abführen eines zweiten desorbierten Gases aus der einen der Adsorptionskolonnen nach dem ersten Desorptionsschritt, und
der zweite Desorptionsschritt in der einen der Adsorptionskolonnen wird parallel zum Adsorptionsschritt in einer anderen der Adsorptionskolonnen durchgeführt, die dem Adsorptionsschritt unterzogen wird.

2. Zielgastrennungsverfahren nach Anspruch 1, wobei in dem Spülschritt das erste desorbierte Gas über einen Puffertank zum Speichern des Zielgases in die zu spülende Adsorptionskolonne als Spülgas eingeleitet wird.

3. Zielgastrennungsverfahren nach Anspruch 2, wobei in dem Spülschritt auch das zweite desorbierte Gas über den Puffertank in die zu spülende Adsorptionskolonne als Spülgas eingeleitet wird.

4. Zielgastrennungsverfahren nach einem der Ansprüche 1 bis 3, wobei der erste Desorptionsschritt Reduzieren des Drucks innerhalb der Adsorptionskolonne durch einen ersten Druckminderer zum Reduzieren des Drucks innerhalb der Adsorptionskolonne umfasst, und
der zweite Desorptionsschritt Reduzieren des Drucks innerhalb der Adsorptionskolonne durch einen zweiten Druckminderer zum Reduzieren des Drucks innerhalb der Adsorptionskolonne umfasst.

5. Zielgastrennungsverfahren nach Anspruch 4, wobei der zweite Desorptionsschritt Reduzieren des Drucks innerhalb der Adsorptionskolonne auch durch den ersten Druckminderer von Anfang bis Mitte des zweiten Desorptionsschritts umfasst.

## Revendications

1. Procédé de séparation de gaz cible pour séparer un gaz cible d'un mélange de gaz contenant le gaz cible en utilisant trois colonnes d'adsorption contenant un adsorbant pour adsorber sélectivement le gaz cible, le procédé comprenant la répétition d'un cycle dans chacune des colonnes d'adsorption, le cycle incluant :
une étape d'adsorption consistant à introduire le mélange de gaz dans la colonne d'adsorption pour adsorber le gaz cible dans le mélange de gaz sur l'adsorbant et extraire du gaz non adsorbé de la colonne d'adsorption ; une étape de rinçage consistant à introduire un gaz de rinçage dans la colonne d'adsorption pour extraire du gaz de rinçage de rejet de la colonne d'adsorption ; et une étape de désorption consistant à réduire la pression à l'intérieur de la colonne d'adsorption pour désorber le gaz cible de l'adsorbant et extraire le gaz désorbé de la colonne d'adsorption,
dans lequel le mélange de gaz est introduit en continu dans l'une quelconque des colonnes d'adsorption de sorte que l'étape d'adsorption soit réalisée en continu dans l'une quelconque des colonnes d'adsorption dans le cycle,
le temps de désorption du début à la fin de l'étape de désorption est plus long que le temps d'adsorption du début à la fin de l'étape d'adsorption,
le temps de rinçage du début à la fin de l'étape de rinçage est plus court que le temps d'adsorption, et
l'étape de désorption dans une des colonnes d'adsorption inclut une première étape de désorption pour extraire un premier gaz désorbé de ladite une des colonnes d'adsorption du début de l'étape de désorption après l'étape de rinçage jusqu'à la fin de l'étape d'adsorption dans une autre des colonnes d'adsorption qui subit l'étape d'adsorption, et une seconde étape de désorption pour extraire un second gaz désorbé de ladite une des colonnes d'adsorption après la première étape de désorption, et
la seconde étape de désorption dans ladite une des colonnes d'adsorption est réalisée en parallèle avec l'étape d'adsorption dans une autre des colonnes d'adsorption qui subit l'étape d'adsorption.

2. Procédé de séparation de gaz cible selon la revendication 1, dans lequel dans l'étape de rinçage, le premier gaz désorbé est introduit, par un réservoir tampon pour stocker du gaz cible, dans la colonne d'adsorption pour être rincé en tant que gaz de rinçage.

3. Procédé de séparation de gaz cible selon la revendication 2, dans lequel dans l'étape de rinçage, le second gaz désorbé est également introduit par un réservoir tampon dans la colonne d'adsorption pour être rincé en tant que gaz de rinçage.

4. Procédé de séparation de gaz cible selon l'une quelconque des revendications 1 à 3, dans lequel la première étape de désorption comprend la réduction de la pression à l'intérieur de la colonne d'adsorption par un premier dispositif de dépressurisation pour réduire la pression à l'intérieur de la colonne d'adsorption, et
la seconde étape de désorption comprend la réduction de la pression à l'intérieur de la colonne d'adsorption par un second dispositif de dépressurisation pour réduire la pression à l'intérieur de la colonne d'adsorption.

5. Procédé de séparation de gaz cible selon la revendication 4, dans lequel la seconde étape de désorption comprend la réduction de la pression à l'intérieur de la colonne d'adsorption également par le premier dispositif de dépressurisation du début au milieu de la seconde étape de désorption.
